# EUROPEAN PATENT SPECIFICATION

(11) **EP 1 188 651 B1**
(45) Date of publication and mention of the grant of the patent: **24.03.2004**
(21) Application number: 01120589.5
(22) Date of filing: 29.08.2001
(51) Int. Cl.: B62J 9/00

(54) **Container box structure in two-wheeled motor vehicle**
Aufbewahrungsbehälter an einem zweirädrigen Motorrad
Container d'une motocyclette à deux roues

(30) Priority: 08.09.2000 JP 2000274042
(43) Date of publication of application: 20.03.2002
(73) Proprietor: Honda Giken Kogyo Kabushiki Kaisha, Minato-ku, Tokyo (JP)
(72) Inventor: Izawa, Kenji, K.K. Honda Gijutsu Kenkyusho, Wako-shi, Saitama (JP); Yano, Kengo, K.K. Honda Gijutsu Kenkyusho, Wako-shi, Saitama (JP); Inayama, Yoichi, K.K. Honda Gijutsu Kenkyusho, Wako-shi, Saitama (JP)
(74) Representative: Liska, Horst, Dr.-Ing.

(56) References cited:
- EP-A- 0 323 908
- EP-A- 0 952 076
- EP-A- 1 125 835
- GB-A- 2 210 340
- US-A- 6 073 719
- PATENT ABSTRACTS OF JAPAN vol. 1999, no. 10, 31 August 1999 (1999-08-31) & JP 11 129969 A (YAMAHA MOTOR CO LTD), 18 May 1999 (1999-05-18)

## Description

The present invention relates to a two-wheeled motor vehicle with a container box structure. A two-wheeled motor vehicle with a container box structure according to the preamble of claim 1 is known from EP-A-0 323 908.

In a certain type of a two-wheeled motor vehicle, a container box is disposed at a rear portion of a vehicle body, like a scooter type two-wheeled motor vehicle. As two-wheeled motor vehicles of this type there are known, for example, "two-wheeled motor vehicle" in Japanese Utility Model Publication No. Hei 7-46617 (hereinafter referred to as "prior art ①" ) and "scooter type two- and three-wheeled motor vehicles" in Japanese Patent Laid-open No. Hei 10-236357 ( "prior art ②" hereinafter).

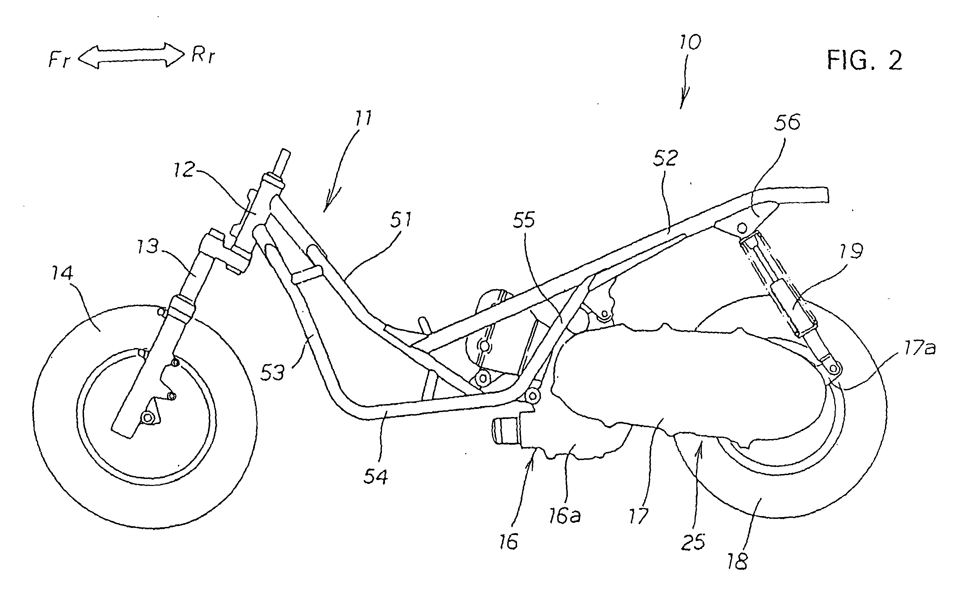

In the prior art ①, as shown in Fig. 2 of the above publication thereof, a front container box 12 (the reference numeral is quoted from the above publication, as is also the case with the following) is disposed below a seat 21, while a rear container box 22 is disposed behind the seat 21 and above a rear wheel 20, and helmets H are received within the front and rear container boxes 12, 22, respectively. Thus, the front and rear container boxes 12, 22 are separated front and rear from each other.

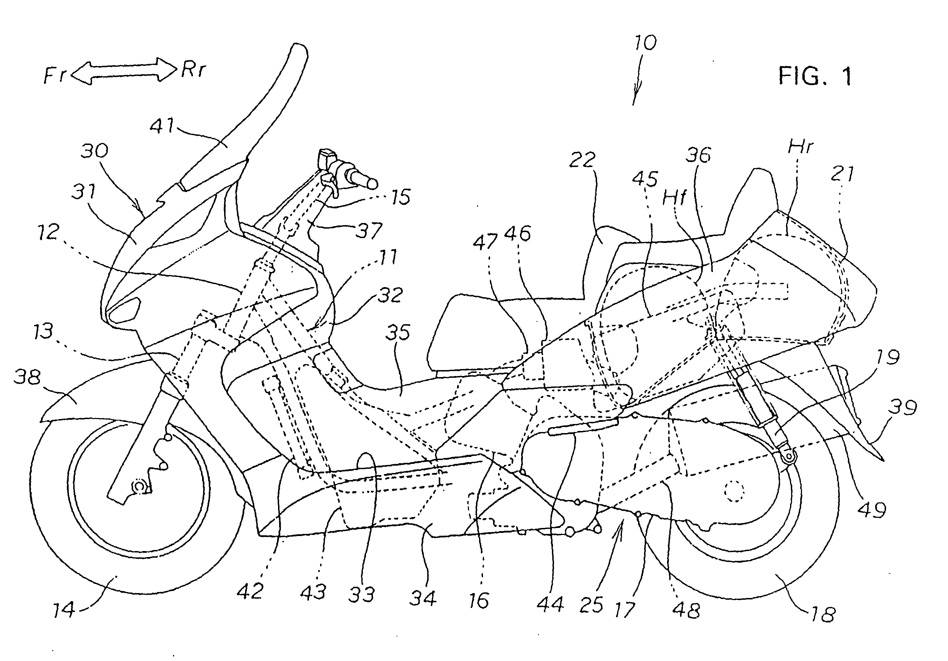

In the prior art ②, as shown in Figs. 1 and 2 of the above publication thereof, an elongated container box 41 having a length equal to the overall length of a couple-ride seat 17 is disposed below the seat 17, a rear wheel 11 is disposed below a rear half portion of the container box 41, and a helmet is received within a rear half portion of the container box 41.

In the prior art ② referred to above, as the case may be, the front and rear container boxes 12, 22 are gathered into a single elongated container box to meet requirements in design for the two-wheeled motor vehicle concerned and two helmets H are accommodated front and rear within the container box. The container box which contains two helmets H is large in capacity, so if the container box of a large capacity is merely disposed above the rear wheel 20 and below the seat 21, it is inevitably required that a vertical position of the seat 21 be raised to ensure the space for installation. In view of a foot touching performance it is impossible to simply raise or lower the seat 21.

This is also true of the prior art ② described above.

It is an object of the present invention to provide a technique which permits two helmets to be contained in a container box without raising a vertical position of a seat.

This object is achieved by the features of claim 1. According to claim 1, in a two-wheeled motor vehicle wherein a container box extending longitudinally of a vehicle body is disposed above a rear wheel and a seat is disposed on the container box, there is provided a container box structure characterized in that a bottom plate of the container box is constituted by a forwardly downward slant face and a rearwardly downward slant face so as to be formed in an approximately inverse-V shape in a side view and so as to permit helmets to be put on both the forwardly downward slant face and the rearwardly downward slant face, respectively.

The bottom plate of the container box is approximately inverse-V shaped when seen sideways. Thus, the container box can be disposed so that the bottom plate thereof covers an upper portion of the rear wheel, and it can so much be lowered. Besides, since the bottom plate is provided with forwardly and rearwardly downward slant faces, the capacity of the container box so much increases. Further, two helmets can be accommodate in front and rear positions within the container box by placing them on the forwardly and rearwardly downward slant faces, respectively.

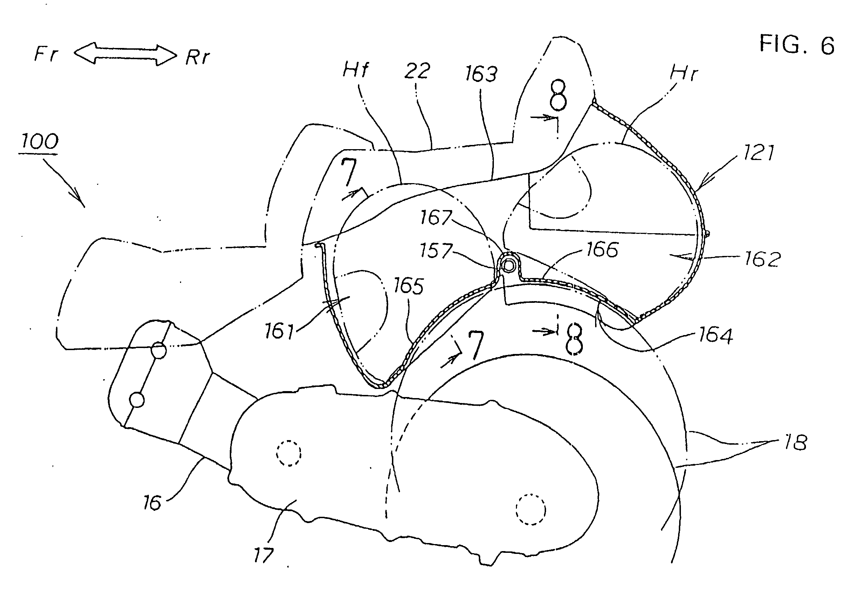

Embodiments of the present invention will be described hereinunder with reference to the accompanying drawings. It is illustrated in:
Fig. 1
   A left side view of a two-wheeled motor vehicle (first embodiment) related to the present invention.
Fig. 2
   A left side view of a body frame (first embodiment) related to the present invention.
Fig. 3
   A sectional view of a helmet container box (first embodiment) according to the present invention as seen sideways from the left.
Fig. 4
   A left side view of a two-wheeled motor vehicle (second embodiment) related to the present invention.
Fig. 5
   A left side view of a body frame (second embodiment) related to the present invention.
Fig. 6
   A sectional view of a helmet container box (second embodiment) according to the present invention as seen sideways from the left.
Fig. 7
   A sectional view taken on line 7-7 in Fig. 6.
Fig. 8
   A sectional view taken on line 8-8 in Fig. 6.
Fig. 9
   An operational diagram of container box structures in a two-wheeled motor vehicle.

In the following description, "front," "rear," "left," "right," "upper," and "lower" represent directions as seen from the vehicle rider side, and Fr, Rr, L, and R stand for front, rear, left, and right sides, respectively. Further, the drawings should be seen in the directions of reference numerals.

First, with reference to Figs. 1 to 3, a description will be given below about a container box structure according to the first embodiment of the present invention.

Fig. 1 is a left side view of a two-wheeled motor vehicle (first embodiment) related to the present invention.

The two-wheeled motor vehicle, indicated at 10, is a scooter type two-wheeled motor vehicle mainly composed of a body frame 11, a front fork 13 attached to a head pipe 12 of the body frame 11, a front wheel 14 secured to the front fork 13, a handlebar 15 connected to the front fork 13, an engine 16 mounted to a rear portion of the body frame 11, a power transfer mechanism 17 secured co the engine 16 vertically swingably, a rear wheel 18 secured to the power transfer mechanism 17, rear cushion units 19 which suspend a rear end portion of the power transfer mechanism 17 from the body frame 11, a helmet container box 21 attached to a rear upper portion of the body frame 11, and a seat 22 mounted above the helmet container boxy 21 so that it can be opened and closed. The seat 22 is a double seat.

The helmet container box 21 (hereinafter referred to simply as "container box 21" ) is an elongated resin box disposed above the rear wheel 18 and extending longitudinally of the vehicle body. The container box 21 permits helmets Hf and Hr to be contained therein in front and rear positions.

In the two-wheeled motor vehicle 10, the body frame 11 is covered with a body cover 30. The body cover 30 includes a front cover 31 which covers a front portion of the head pipe 12, an inner cover 32 which covers a rear portion of the front cover 31, right and left floor steps 33 of a low floor type for the vehicle rider to put his or her feet thereon, right and left floor skirts 34 extending downward from an outer edge of the floor step 33, a center cover 35 extending backward from the inner cover 32 and which covers a longitudinally central portion of the body frame 11, and a rear cover 36 extending backward from the center cover 35 and which covers the rear portion of the body frame 11.

In the figure, the numeral 37 denotes a handlebar cover, numeral 38 denotes a front fender, numeral 39 denotes a rear fender, 41 a windscreen, 42 a radiator for cooling the engine, 43 a fuel tank, 44 a passenger step, 45 an air cleaner, 46 an air chamber, 47 a throttle valve, 48 an exhaust pipe for the engine, and 49 a muffler for exhaust.

Fig. 2 is a left side view of the body frame (first embodiment) related to the present invention.

The body frame 11 is a double cradle type frame wherein a pair of main pipes 51 extend rearwardly downward from the head pipe 12, a pair of rear frames 52 extend rearwardly upward from longitudinally intermediate positions of the main pipes 51, a pair of down-pipes 53 extend rearwardly downward from the head pipe 12 below the main pipes 51, a pair of lower pipes 54 extend rearward from lower ends of the down-pipes 53, lower ends of the main pipes 51 are connected to longitudinally intermediate positions of the lower pipes 54, upper pipes 55 extend rearwardly upward from rear ends of the lower pipes 54, and rear ends of the upper pipes 55 are connected to longitudinally intermediate positions of the rear frames 52.

The rear frames 52 extend longitudinally above the rear wheel 18 and are provided at rear end portions thereof with brackets 56 which connect upper portions of the right and left rear cushion units 19 (only the left one is shown in the figure).

The power transfer mechanism 17 is connected to a crank case 16a of the engine 16 vertically swingably and the rear wheel 18 is secured to a rear portion of the power transfer mechanism rotatably. Thus, the power transfer mechanism 17 plays the role of a rear fork (swing arm) 25. Further, the power transfer mechanism 17 is provided at the rear end thereof with brackets 17a for connecting lower portions of the rear cushion units 19 thereto.

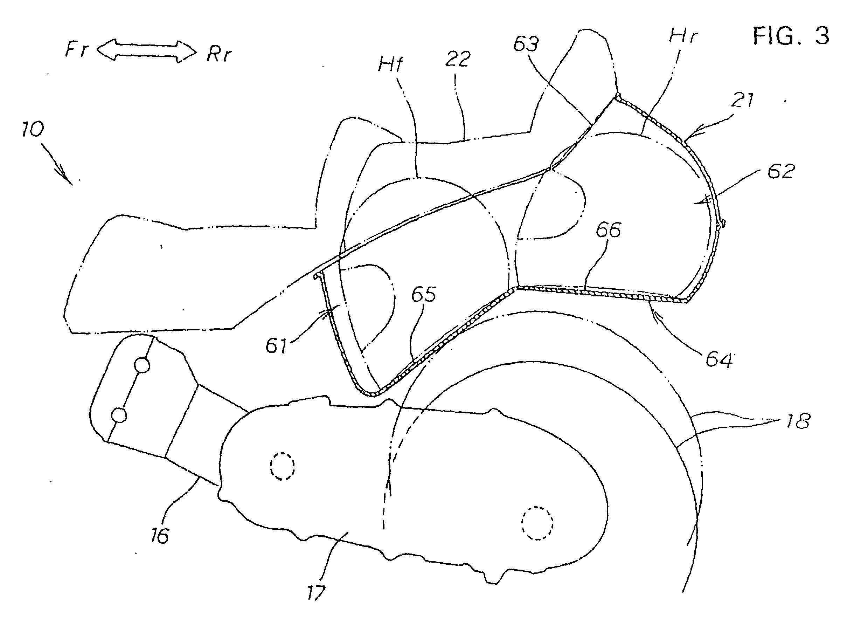

Fig. 3 is a sectional view of the container box 21 (first embodiment) as seen sideways from the left.

The container box 21 is an upper open type box integrally formed with a front container portion 61 for receiving the front helmet Hf and a rear container portion 62 for receiving the rear helmet Hr. An opening 63 of the container box 21 is opened and closed with the seat 22. More specifically, a front lower portion of the seat 22 is pivoted to the body frame 11 (vehicle body) shown in Fig. 2 and the upper opening 63 of the container box 21 is opened by lifting a rear portion of the seat. The length in the longitudinal direction of the container box 21 is approximately equal to the outside diameter of the rear wheel 18 and is a little larger than the length of the rear seat portion of the seat 22. The container box 21 is positioned so as to be substantially within the range from the front to the rear end of the rear wheel 18 when the two-wheeled motor vehicle 10 is seen sideways.

A bottom plate 64 of the container box 21 is made up of a forwardly downward slant face 65 as a front half and a rearwardly downward slant face 66 as a rear half so as to be formed in an approximately inverse-V shape when seen sideways. The forwardly downward slant face 65 and the rearwardly downward slant face 66 are of a flat shape which generally conforms to the contour of the rear wheel 18 when the rear wheel 18 rises to its maximum extent as shown in an imaginary line. The angle of inclination of the rearwardly downward slant face 66 is gentler than that of the forwardly downward slant face 65. The container box 21 is disposed so that an upper portion of the rear wheel 18 is covered with both the forwardly downward slant face 65 and the rearwardly downward slant face 66. The helmets Hf and Hr can be received within the front and rear container portions 61, 62 by putting them on the forwardly downward slant face 65 and the rearwardly downward slant face 66, respectively.

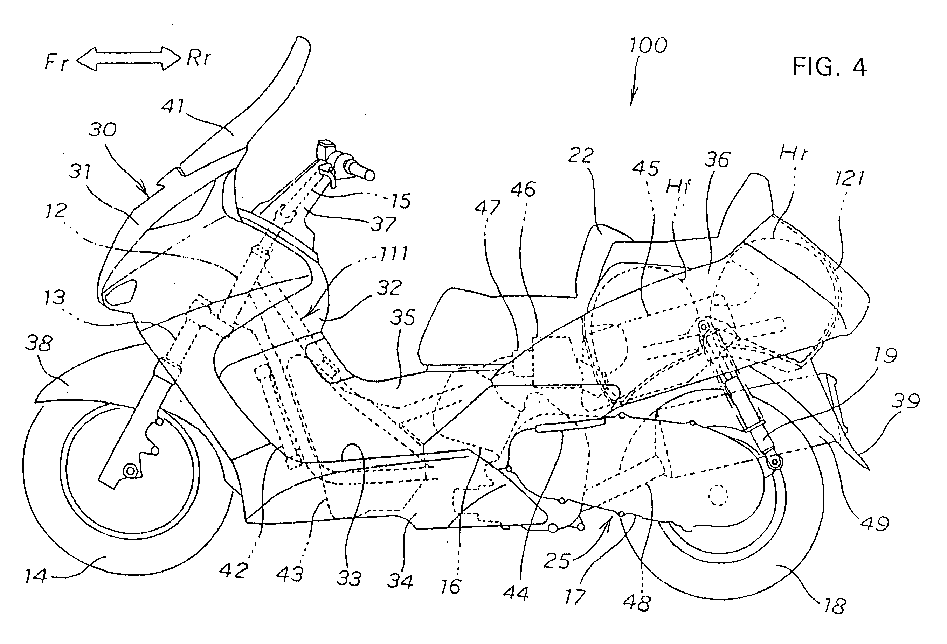

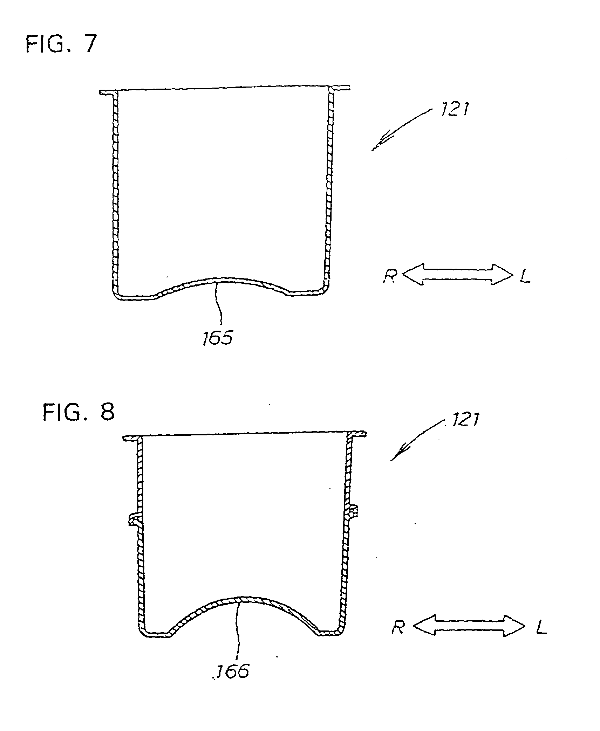

Next, with reference to Figs. 4 to 8, the following description is provided about a container box structure in a two-wheeled motor vehicle according to the second embodiment of the present invention. It should be noted that the same portions as in the above first embodiment illustrated in Figs. 1 to 3 are identified by the same reference numerals as in the first embodiment and explanations thereof will be omitted.

Fig. 4 is a left side view of a two-wheeled motor vehicle (second embodiment) according to the present invention.

In this second embodiment, the two-wheeled motor vehicle, indicated at 100, is a scooter type two-wheeled motor vehicle mainly composed of a body frame 111, a front fork 13, a front wheel 14, a handlebar 15, an engine 16, a power transfer mechanism 17, a rear wheel 18, rear cushion units 19, a helmet container box 121, and a seat 22.

The helmet container box 121 (hereinafter referred to simply as "container box 121" ) is an elongated box disposed above the rear wheel 18 and extending longitudinally of the vehicle body. Helmets Hr and Hr can be received within front and rear portions, respectively, of the container box 121.

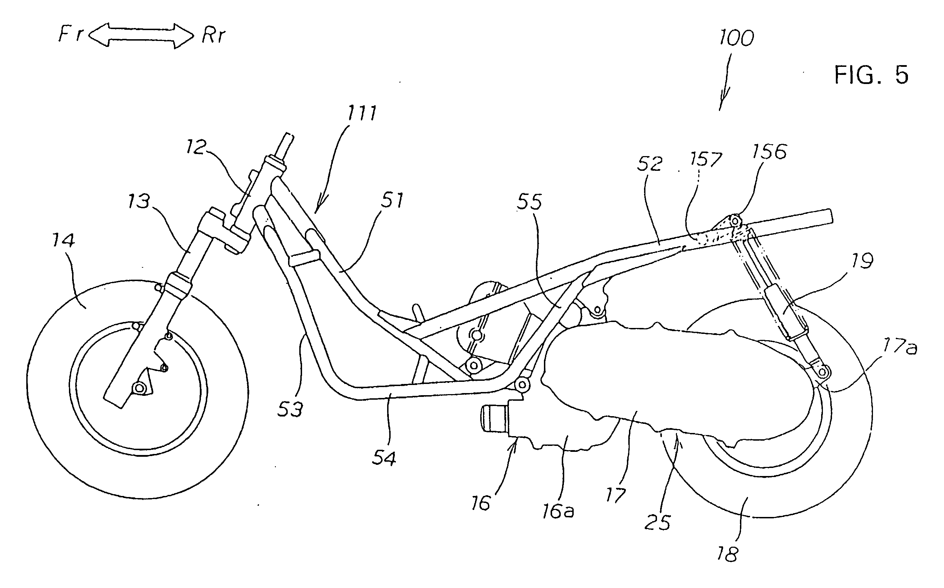

Fig. 5 is a left side view of the body frame (second embodiment) according to the present invention.

In the body frame 111 used in the second embodiment, the shape of brackets 156 provided at rear portions of rear frames 52 is different from that of the brackets 56 used in the first embodiment shown in Fig. 2. Numeral 157 denotes a cross member. Other constructional points are the same as in the body frame 11 used in the first embodiment.

Fig. 6 is a sectional view of the container box 121 (second embodiment) according to the present invention as seen sideways from the left.

The container box 121 is an upper open type box which is integrally formed with a front container portion 161 for receiving the front helmet Hf therein and a rear container portion 162 for receiving the rear helmet Hr therein. An upper opening 163 of the container box 121 is opened and closed with the seat 22. More specifically, a front lower portion of the seat 22 is pivoted to the body frame 111 (vehicle body) shown in Fig. 5 and the upper opening 163 of the container box 121 is opened by lifting a rear portion of the seat. The length in the longitudinal direction of the container box 121 is approximately equal to the outside diameter of the rear wheel 18 and is a littler larger than the length of the rear seat portion of the seat 22. The container box 121 is positioned so as to be substantially within the range from the front to the rear end of the rear wheel 18 when the two-wheeled motor vehicle 100 is seen sideways.

A bottom plate 164 of the container box 121 is of a curved shape generally conforming to the contour of the rear wheel 18 when seen sideways. To be more specific, the bottom plate 164 is made up of a forwardly downward slant face 165 as a front half, a rearwardly downward slant face 166 as a rear half, and a cover portion 167 located at a longitudinally central position, so as to be formed in an approximately inverse-V shape in a side view. The forwardly downward slant face 165 and the rearwardly downward slant face 166 are of an arcuate shape which generally conforms to the contour of the rear wheel 18 when the rear wheel rises to its maximum extent as shown in an imaginary line. The angle of inclination of the rearwardly downward slant face is gentler than that of the forwardly downward slant face 165. The container box 121 is disposed so that an upper portion of the rear wheel 18 is covered with both slant faces 165 and 166. The helmets Hf and Hr can be received within the front and rear container portions 161, 162 by putting them on the slant faces 165 and 166, respectively.

The cover portion 167 covers the cross member 157.

Fig. 7 is a sectional view taken on line 7-7 in Fig. 6, showing a sectional shape of the forwardly downward slant face 165.

Fig. 8 is a sectional view taken on line 8-8 in Fig. 6, showing a sectional shape of the rearwardly downward slant face 166.

Figs. 9(a) to 9(d) are operational diagrams of container box structures in the two-wheeled motor vehicle.

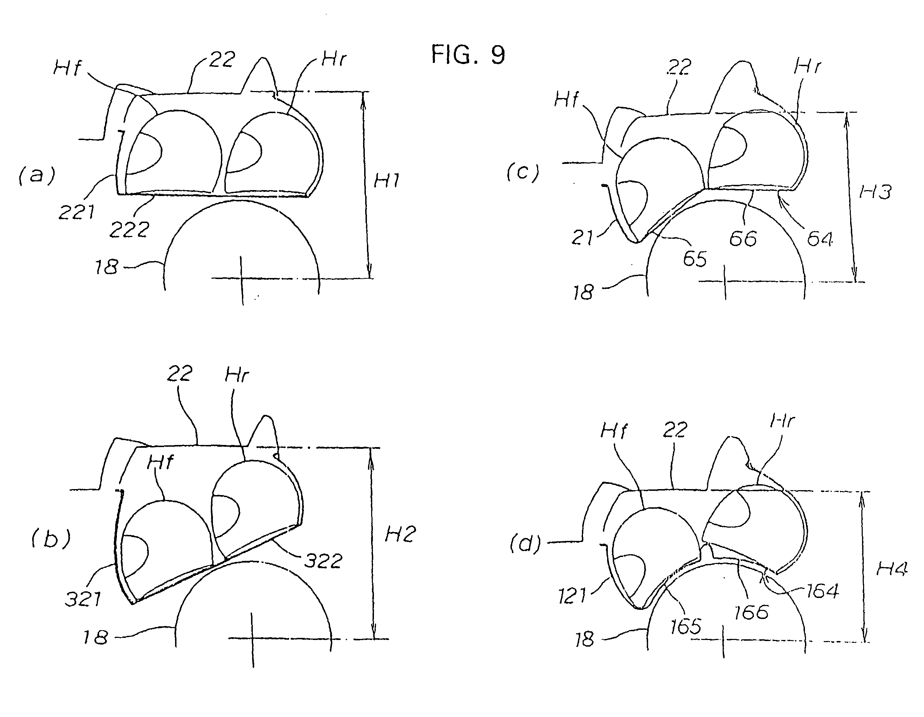

Fig. 9(a) is a first comparative example, showing that the whole of a bottom plate 222 of a container box 221 is flat and horizontal when seen sideways. The whole of the bottom plate 222 is positioned higher than the rear wheel 18. According to this structure, the height from the center of the rear wheel 18 up to the seat 22 is H1, which is relatively large.

Fig. 9(b) is a second comparative example, showing that the whole of a bottom plate 322 of a container box 321 is flat and forwardly inclined when seen sideways. A rear half portion of the bottom plate 322 rises largely from the rear wheel 18. According to this structure, the height from the center of the rear wheel 18 up to the seat 22 is H2, which is large.

Fig. 9(c) is the first embodiment, corresponding to the container box 21 shown in Fig. 3. The bottom plate 64 of the container box 21 is generally formed in an approximately inverse-V shape in a side view. The container box 21 can be disposed in such a manner that the upper portion of the rear wheel 18 is covered with both forwardly and rearwardly downward slant faces 65, 66. The container box 21 can therefore be so much lowered. According to this structure, the height from the center of the rear wheel 18 up to the seat 22 is H3, which is small.

Further, since the bottom plate 64 has both forwardly and rearwardly downward slant faces 65, 66, the capacity of the container box 21 so much increases. By putting the helmets Hf and Hr on the forwardly downward slant face 65 and the rearwardly downward slant face 66, respectively, both helmets can be easily received within the container box 21 thus having a large capacity.

Fig. 9(d) is the second embodiment, corresponding to the container box 121 shown in Fig. 6. The bottom plate 164 of the container box 121 is generally formed in an approximately inverse-V shape in a side view. Besides, it is of a curved shape which generally conforms to the contour of the rear wheel 18. This curved shape permits the container box 121 to be lowered to a greater extent than in the above (c). According to this structure, the height from the center of the rear wheel 18 up to the seat 22 is H4, which gets much smaller.

Further, since the curved shape generally conforms to the contour of the rear wheel 18, the capacity of the container box 121 becomes larger. By putting the helmets Hf and Hr on the forwardly downward slant face 165 and the rearwardly downward slant face 166, respectively, both helmets can be easily received within the container box 121 thus having a large capacity.

Thus, by forming the bottom plates 64 and 164 of the container boxes 21 and 121 in an approximately inverse-V shape in a side view, as in the above (c) and (d), the capacity of each of the container boxes 21 and 121 can be ensured sufficient for receiving therein two helmets Hr and Hr in front and rear positions without increasing the height of the seat 22.

In the above embodiments of the present invention the two-wheeled motor vehicle 10 is not limited to the scooter type two-wheeled motor vehicle.

The above construction of the present invention brings about the following effects.

In claim 1, the bottom plate of the container box is formed in an approximately inverse-V shape in a side view, being composed of a forwardly downward slant face and a rearwardly downward slant face so that helmets can be put on the slat faces, respectively. Therefore, the container box can be disposed in such a manner that the upper portion of the rear wheel is covered with the bottom plate so that the container box can be so much lowered. Besides, such forwardly and rearwardly downward slant faces of the bottom plate permit an increase in capacity of the container box and thus it is possible to ensure a sufficient capacity of the container box for receiving two helmets therein in front and rear positions without increasing the height of the seat.

Object: Two front and rear helmets are to be contained in a container box without increasing the height of a seat.

Solving Means: In a two-wheeled motor vehicle 10, a container box 21 extending in the longitudinal direction of a vehicle body is disposed above a rear wheel 18, and a seat 22 is disposed above the container box 21. A bottom plate 64 of the container box 21 is formed in an approximately inverse-V shape in a side view, being composed of a forwardly downward slant face 65 and a rearwardly downward slant face 66. Two helmets Hf and Hr can be received in front and rear positions within the container box 21, by putting them on a forwardly downward slant face 65 and a rearwardly downward slant 66, respectively.

## Claims

1. A two-wheeled motor vehicle (10; 100) with a body frame (11) comprising a pair of main pipes (51) which extend rearwardly downward from a head pipe (12) and a pair of rear frames (52) which extend rearwardly upward from longitudinally intermediate positions of the main pipes (51),
a rear fork (25) for supporting a rear wheel (18),
wherein the rear frames (52) extend longitudinally above the rear wheel (18) and are connected at rear end portions thereof to the rear ends of the rear fork (25) by means of rear cushion units (19),
wherein the two-wheeled motor vehicle (10; 100) is provided with a container box (21; 121) which extends longitudinally of the vehicle body and is disposed above the rear wheel (18),
wherein a rear seat (22) is disposed on said container box (21; 121),
wherein a bottom plate (64; 164) of the container box (21; 121) is constituted by a front portion (61) and a rear portion (62),
**characterized in**
**that** the front portion (61) is constituted by a forwardly downward slant face (65; 165) and the rear portion (62) is constituted by a rearwardly downward slant face (66; 166) so as to be formed in an approximately inverse-V shape in a side view and so as to permit helmets (Hf, Hr) to be put on both said forwardly downward slant face (65; 165) and rearwardly downward slant face (66; 166), respectively,
**that** the shape of the bottom plate (64; 164) generally conforms to the contour of the rear wheel (18) when the rear wheel (18) rises to its maximum extent, and
**that** the container box (21; 121) is disposed so that an upper portion of the rear wheel (18) is covered with both slant faces (65, 66; 165, 166).

## Patentansprüche

1. Zweiradmotorfahrzeug (10; 100) mit einem Rumpfrahmen (11) umfassend ein Paar Hauptrohre (51), die sich von einem Kopfrohr (12) aus nach hinten und nach unten erstrecken, und ein Paar hintere Rahmen (52), welche sich von Längszwischenpositionen der Hauptrohre (51) aus nach hinten und nach oben erstrecken;
eine hintere Gabel (25) zur Abstützung eines Hinterrads (18),
wobei sich die hinteren Rahmen (52) der Länge nach über das Hinterrad (18) erstrecken und mit hinteren Endabschnitten davon mit hinteren Enden der hinteren Gabel (25) durch hintere Dämpfereinheiten (19) verbunden sind, wobei das Zweiradmotorfahrzeug (10; 100) mit einem Aufnahmebehälter (21; 121) versehen ist, welcher sich längs des Fahrzeugkörpers erstreckt und über dem Hinterrad (18) angeordnet ist,
wobei ein hinterer Sitz (22) auf dem Aufnahmebehälter (21; 121) angeordnet ist, und wobei eine Bodenplatte (64; 164) des Aufnahmebehälters (21; 121) von einem vorderen Abschnitt (61) und einem hinteren Abschnitt (62) gebildet ist,
**dadurch gekennzeichnet,**
**dass** der vordere Abschnitt (61) von einer nach vorne und nach unten geneigten Fläche (65; 165) gebildet ist, und der hintere Abschnitt (62) von einer nach hinten und nach unten geneigten Fläche (66; 166) gebildet ist, so dass sie in einer Seitenansicht annähernd umgekehrt V-förmig ausgebildet sind und gestatten, dass Helme (Hf, Hr) jeweils sowohl auf die nach vorne und nach unten geneigte Fläche (65; 165) als auch auf die nach hinten und nach unten geneigte Fläche (66; 166) gelegt werden,
**dass** die Form der Bodenplatte (64; 164) im Allgemeinen der Kontur des Hinterrads (18) entspricht, wenn das Hinterrad (18) maximal angehoben ist, und
**dass** der Aufnahmebehälter (21; 121) so angeordnet ist, dass ein oberer Abschnitt des Hinterrads (18) durch beide geneigten Flächen (65, 66; 165, 166) abgedeckt ist.

## Revendications

1. Motocyclette à deux roues (10 ; 100) avec un cadre (11) comprenant deux tubes principaux (51) qui s'étendent en arrière vers le bas depuis un tube de guidon (12) et deux cadres arrière (52) qui s'étendent en arrière vers le haut depuis des positions intermédiaires longitudinalement des tubes principaux (51),
une fourche arrière (25) pour supporter une roue arrière (18),
dans laquelle les cadres arrière (52) s'étendent longitudinalement au-dessus de la roue arrière (18) et sont raccordés par des portions d'extrémité arrière aux extrémités arrière de la fourche arrière (25) au moyen d'unités d'amortissement arrière (19), dans laquelle la motocyclette à deux roues (10 ; 100) est dotée d'un conteneur (21 ; 121) qui s'étend le long du corps du véhicule et est disposé au-dessus de la roue arrière (18),
dans laquelle un siège arrière (22) est disposé sur ledit conteneur (21 ; 121), dans lequel une plaque de fond (64 ; 164) du conteneur (21 ; 121) est constituée par une portion avant (61) et une portion arrière (62),
**caractérisée en ce que** la portion avant (61) est constituée par une face inclinée en avant vers le bas (65 ; 165) et la portion arrière (62) est constituée par une face inclinée en arrière vers le bas (66 ; 166) de manière à être formée en une forme approximativement en V inversé en vue latérale et de manière à permettre à des casques (Hf, Hr) d'être posés à la fois sur ladite face inclinée en avant vers le bas (65 ; 165) et ladite face inclinée en arrière vers le bas (66 ; 166), respectivement,
**en ce que** la forme de la plaque de base (64 ; 164) coïncide généralement avec le contour de la roue arrière (18) lorsque la roue arrière (18) remonte à son niveau maximal, et
**en ce que** le conteneur (21 ; 121) est disposé de sorte qu'une portion supérieure de la roue arrière (18) est recouverte par les deux faces inclinées (65, 66 ; 165, 166).
